# EUROPEAN PATENT APPLICATION

(11) **EP 4 414 663 A1**
(43) Date of publication of application: **14.08.2024**
(21) Application number: 21961806.3
(22) Date of filing: 28.10.2021
(51) Int. Cl.: G01C 25/00

(54) **CALIBRATION METHOD AND APPARATUS**

(71) Applicant: Huawei Technologies Co., Ltd., Shenzhen, Guangdong 518129 (CN)
(72) Inventor: LI, Qinghua, Shenzhen, Guangdong 518129 (CN); YIN, Jixiong, Shenzhen, Guangdong 518129 (CN); XIONG, Ke, Shenzhen, Guangdong 518129 (CN); CAI, Meng, Shenzhen, Guangdong 518129 (CN); PAN, Ming, Shenzhen, Guangdong 518129 (CN); XU, Yiming, Shenzhen, Guangdong 518129 (CN)
(74) Representative: Epping - Hermann - Fischer
(86) International application number: PCT/CN2021/127047
(87) International publication number: WO 2023/070440

(57) **Abstract**

A calibration method and an apparatus are provided, to perform online calibration on a sensor. This can resolve a problem of a temperature drift coefficient change due to aging of a sensor in its using process. The method includes: determining, by using an environment perception algorithm and a first sensor, whether a first device is in a first state (S501); when the first device is in the first state, obtaining first data by using a posture detection algorithm and the first sensor, and obtaining second data by using the environment perception algorithm and a second sensor (S502); controlling the second sensor, and obtaining third data of the first sensor and fourth data of the second sensor (S503); and calibrating the first sensor based on the first data, the second data, the third data, and the fourth data (S504). The first sensor is configured to detect a posture parameter of the first device. The first state includes a static state or a first motion state. The second sensor is configured to detect a parameter of an environment in which the first device is located.

## Description

### TECHNICAL FIELD

This application relates to the communication field, and in particular, to a calibration method and an apparatus.

### BACKGROUND

An intelligent beam tracking (intelligent beam tracing antenna, IBT) antenna can use a dual-reflector microwave antenna with an adjustable secondary reflector to implement beam tracking. The dual-reflector microwave antenna includes a primary reflector and the secondary reflector. For example, a control module of the IBT antenna estimates an antenna posture by using a posture sensor, and controls to adjust a beam to a direction opposite to antenna shaking, so that the beam is always aligned with a peer-end antenna. This resolves a problem of changes of antenna postures caused by wind, sunlight, and the like. For example, antenna shaking resulting from wind and tower bending resulting from sunlight cause the changes of the antenna postures.

In an existing posture detection technology, antenna posture detection is implemented by using a micro-electro-mechanical systems (micro-electro-mechanical systems, MEMS) inertial sensor. However, detection precision of the MEMS inertial sensor is greatly affected by temperature, causing errors in antenna posture evaluation. To improve posture detection precision, the MEMS inertial sensor is calibrated in a factory manufacturing phase.

However, factory calibration cannot eliminate a temperature drift coefficient change due to aging of a sensor in its using process.

### SUMMARY

This application provides a calibration method and an apparatus, to perform online calibration on a sensor. This can resolve a problem of a temperature drift coefficient change due to aging of a sensor in its using process.

To achieve the foregoing objective, this application uses the following technical solutions. According to a first aspect, a calibration method is provided. The calibration method includes: determining, by using an environment perception algorithm and a first sensor, whether a first device is in a first state; when the first device is in the first state, obtaining first data by using a posture detection algorithm and the first sensor, and obtaining second data by using the environment perception algorithm and a second sensor; when the first device is in the first state, controlling the second sensor, and obtaining third data of the first sensor and fourth data of the second sensor; and calibrating the first sensor based on the first data, the second data, the third data, and the fourth data when the first device is in the first state. The first sensor is configured to detect a posture parameter of the first device. The first state includes a static state or a first motion state. The second sensor is configured to detect a parameter of an environment in which the first device is located.

According to the calibration method provided in the first aspect, a calibration apparatus determines, by using the environment perception algorithm and the first sensor, whether the first device is in the first state; and calibrates the first sensor based on the first data, the second data, the third data, and the fourth data when the first device is in the first state, where the first state includes the static state or the first motion state. In this way, whether to perform online calibration on the first sensor is determined by detecting an external environment, so that online calibration of a temperature drift coefficient can be implemented. Therefore, a problem of a temperature drift coefficient change due to aging of the sensor in its using process can be resolved, and precision of the first sensor can be improved. In addition, factory calibration is not needed. This reduces costs and improves production efficiency.

It should be noted that the first sensor in this application may be a sensor calibrated in a factory, or may be a sensor that is not calibrated in a factory. This is not limited in this application. For example, after calibration is performed in a factory for a temperature drift problem, an aging problem, and the like of the first sensor, the online calibration is performed with reference to the method provided in this application, so that the precision of the first sensor can be further improved. In a possible design, the first state includes the static state, and the determining, by using an environment perception algorithm and a first sensor, whether a first device is in a first state may include: obtaining fifth data by using the environment perception algorithm and the first sensor; obtaining sixth data at an interval of a first time period by using the environment perception algorithm and the first sensor; and if a difference between the fifth data and the sixth data is less than or equal to a first threshold, determining that the first device is in the first state; otherwise, determining that the first device is not in the first state. In other words, the external environment may be determined based on a value of the first sensor. If a value change is greater than the first threshold, it indicates that the external environment is unstable.

In a possible design, the calibration method provided in the first aspect may further include: calibrating the first sensor based on the first data and seventh data. The seventh data is initial data obtained by using the first sensor or obtained by using the first sensor after previous-time calibration. In this way, an error caused by the aging can be calibrated.

In a possible design, the calibration method provided in the first aspect may further include: when the first device is not in the first state, stopping a current operation, and controlling the first device to enter a running state. The running state includes performing beam tracking. In this way, the calibration apparatus calibrates the first sensor when the first device is in the first state, and may interrupt the online calibration when the environment changes. If the calibration is performed when the environment is abnormal, a calibration result is abnormal. This affects subsequent normal operating of the first device.

In a possible design, the calibrating the first sensor based on the first data, the second data, the third data, and the fourth data when the first device is in the first state may include: compensating for the third data of the first sensor based on a first calibration value when the first device is in the first state, to obtain eighth data; and storing the first calibration value if a difference between the eighth data and the second data is less than a second threshold. The first calibration value may be determined based on the first data, the second data, the third data, and the fourth data. In other words, in the process in which the first sensor is calibrated, an adjusted value may be determined, to ensure calibration correctness. If the adjusted value is less than the preset second threshold, it may be considered that the calibration process is normal, and the calibration continues.

In a possible design, the calibration method provided in the first aspect may further include: if the difference between the eighth data and the second data is greater than or equal to the second threshold, stopping a current operation, and controlling the first device to enter the running state. The running state includes performing the beam tracking. In other words, if the adjusted value is greater than or equal to the preset second threshold, it may be considered that an exception occurs in the calibration process, causing an exception in the adjusted value. The current operation is stopped, and the calibration is exited.

In a possible design, the determining, by using an environment perception algorithm and a first sensor, whether a first device is in a first state may include: determining, by using the environment perception algorithm and the first sensor when a first condition is met, whether the first device is in the first state. The first condition includes that a difference between a current moment T and T0 is greater than or equal to a first time threshold, and T0 is a moment of previous-time successful calibration of the first sensor. In this way, the online calibration can be performed on the first sensor periodically.

In a possible design, the first condition may further include receiving an indication of calibrating the first sensor. In other words, the calibration apparatus may determine whether the indication of calibrating the first sensor is received; and if the indication is not received, wait for the indication, or if the indication is received, perform a calibration operation.

According to a second aspect, a calibration apparatus is provided. The calibration apparatus includes a main control module and an environment control module.

The main control module is configured to determine, by using an environment perception algorithm and a first sensor, whether a first device is in a first state. The first sensor is configured to detect a posture parameter of the first device. The first state includes a static state or a first motion state.

The main control module is further configured to: when the first device is in the first state, obtain first data by using a posture detection algorithm and the first sensor, and obtain second data by using the environment perception algorithm and a second sensor. The second sensor is configured to detect a parameter of an environment in which the first device is located.

When the first device is in the first state, the main control module is further configured to: control the second sensor by using the environment control module, and obtain third data of the first sensor and fourth data of the second sensor.

The main control module is further configured to calibrate the first sensor based on the first data, the second data, the third data, and the fourth data when the first device is in the first state.

In a possible design, the first state may include the static state. The main control module is further configured to obtain fifth data by using the environment perception algorithm and the first sensor. The main control module is further configured to obtain sixth data at an interval of a first time period by using the environment perception algorithm and the first sensor.

The main control module is further configured to: if a difference between the fifth data and the sixth data is less than or equal to a first threshold, determine that the first device is in the first state; otherwise, determine that the first device is not in the first state.

In a possible design, the main control module is further configured to calibrate the first sensor based on the first data and seventh data. The seventh data may be initial data obtained by using the first sensor or obtained by using the first sensor after previous-time calibration.

In a possible design, when the first device is not in the first state, the main control module is further configured to: stop a current operation, and control the first device to enter a running state. The running state includes performing beam tracking.

In a possible design, the main control module is further configured to compensate for the third data of the first sensor based on a first calibration value when the first device is in the first state, to obtain eighth data. The first calibration value may be determined based on the first data, the second data, the third data, and the fourth data.

The calibration apparatus may further include a storage module. The storage module is configured to store the first calibration value if a difference between the eighth data and the second data is less than a second threshold.

In a possible design, if the difference between the eighth data and the second data is greater than or equal to the second threshold, the main control module is further configured to: stop a current operation, and control the first device to enter the running state. The running state may include performing the beam tracking.

In a possible design, the main control module is further configured to determine, by using the environment perception algorithm and the first sensor when a first condition is met, whether the first device is in the first state. The first condition may include that a difference between a current moment T and T0 is greater than or equal to a first time threshold, and T0 is a moment of previous-time successful calibration of the first sensor.

In a possible design, the first condition may further include receiving an indication of calibrating the first sensor.

Optionally, the calibration apparatus in the second aspect may further include a transceiver module. The transceiver module is configured to send data and/or signaling to the first device, and may be further configured to receive data and/or signaling sent by another device. The transceiver module may include a receiving module and a sending module. The sending module is configured to send the data and/or the signaling to the first device, and the receiving module is configured to receive the data and/or the signaling sent by the another device. A specific implementation of the transceiver module is not specifically limited in this application.

Optionally, the storage module stores a program or instructions. When a processing module executes the program or the instructions, the calibration apparatus in the second aspect is enabled to perform the calibration method in the first aspect.

It should be noted that the calibration apparatus in the second aspect may be a chip (system) or another part or component that may be disposed on a calibration apparatus. This is not limited in this application.

In addition, for technical effects of the calibration apparatus in the second aspect, refer to the technical effects of the calibration method in any possible implementation of the first aspect. Details are not described herein again.

According to a third aspect, a calibration apparatus is provided. The calibration apparatus includes a processor. The processor is coupled to a memory, and the memory is configured to store a computer program.

The processor is configured to execute the computer program stored in the memory, so that the calibration method in any possible implementation of the first aspect is performed.

In a possible design, the calibration apparatus in the third aspect may further include a transceiver. The transceiver may be a transceiver circuit or an input/output port. The transceiver may be used by the calibration apparatus to communicate with another device.

It should be noted that, the input port may be configured to implement a receiving function in the first aspect, and the output port may be configured to implement a sending function in the first aspect.

In this application, the calibration apparatus in the third aspect may be a chip or a chip system disposed on a calibration apparatus.

In addition, for technical effects of the calibration apparatus in the third aspect, refer to the technical effects of the calibration method in any implementation of the first aspect. Details are not described herein again.

According to a fourth aspect, a communication system is provided. The communication system may include a calibration apparatus, an antenna control module, and an antenna, and may further include a motor and a transceiver device.

According to a fifth aspect, a chip system is provided. The chip system includes a logic circuit and an input/output port. The logic circuit is configured to implement a processing function in the first aspect, and the input/output port is configured to implement receiving and sending functions in the first aspect. Specifically, the input port may be configured to implement the receiving function in the first aspect, and the output port may be configured to implement the sending function in the first aspect.

In a possible design, the chip system further includes a memory, and the memory is configured to store program instructions and data for implementing the functions in the first aspect.

The chip system may include a chip, or may include a chip and another discrete component.

According to a sixth aspect, a computer-readable storage medium is provided, where the computer-readable storage medium stores a computer program or instructions; and when the computer program or the instructions are run on a computer, the calibration method according to any possible implementation of the first aspect is performed.

According to a seventh aspect, a computer program product is provided, where the computer program product includes a computer program or instructions; and when the computer program or the instructions are run on a computer, the calibration method according to any possible implementation of the first aspect is performed.

### BRIEF DESCRIPTION OF DRAWINGS

FIG. 1 is a schematic diagram of a structure of a calibration apparatus according to an embodiment of this application;
FIG. 2 is a schematic flowchart of a calibration method according to an embodiment of this application;
FIG. 3a is a schematic diagram of an architecture of a communication system according to an embodiment of this application;
FIG. 3b is a schematic diagram of an architecture of a communication system according to an embodiment of this application;
FIG. 4a is a schematic diagram of application of an antenna according to an embodiment of this application;
FIG. 4b is a schematic diagram of factory calibration according to an embodiment of this application;
FIG. 5 is a schematic flowchart of a calibration method according to an embodiment of this application;
FIG. 6 is a schematic flowchart of another calibration method according to an embodiment of this application;
FIG. 7 is a schematic diagram of a structure of another calibration apparatus according to an embodiment of this application; and
FIG. 8 is a schematic diagram of a structure of still another calibration apparatus according to an embodiment of this application.

### DESCRIPTION OF EMBODIMENTS

The following describes technical solutions of this application with reference to the accompanying drawings.

In embodiments of this application, "information (information)" and "message (message)" may be interchangeably used sometimes, and meanings expressed by the terms are consistent when differences are not emphasized. "Of (of)", "relevant (relevant)", and "corresponding (corresponding)" may be interchangeably used sometimes, and meanings expressed by the terms are consistent when differences are not emphasized. "Module" and "unit" may be interchangeably used, "component", "entity", and "circuit" may be interchangeably used, and meanings expressed by the terms are consistent when differences are not emphasized. "Control host", "control device", and "control apparatus" may be interchangeably used, and meanings expressed by the terms are consistent when differences are not emphasized. "A plurality of" or "at least one" in this application means two or more, and the term "/" in this application indicates an "or" relationship.

In this application, terms such as "first", "second" and "third" are used to distinguish between same items or similar items that have basically same purposes or functions. There is no logical or time-sequential dependency between "first", "second" and "third", and a quantity and an execution sequence are not limited.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

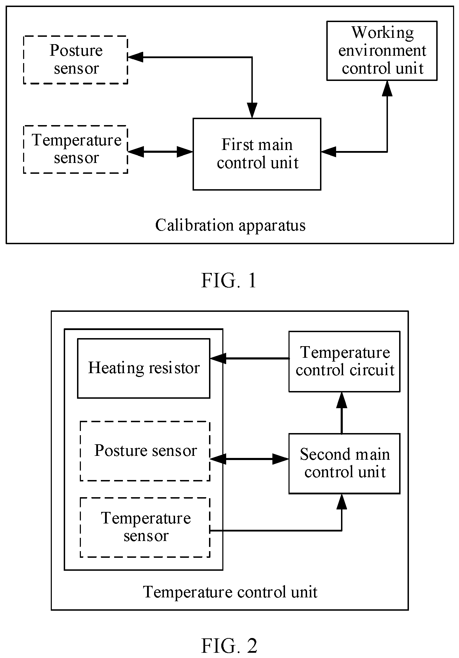

FIG. 1 is a schematic diagram of a structure of a calibration apparatus according to an embodiment of this application.

As shown in FIG. 1, the calibration apparatus may include a working environment control unit and a first main control unit. The calibration apparatus may further include a first sensor and a second sensor. The working environment control unit, the first sensor, the second sensor, and the first main control unit may form an online calibration system. Optionally, the calibration apparatus may further include an IBT antenna control unit.

For example, the working environment control unit may include but is not limited to one or more of the following: a temperature control unit, a posture control unit, and a position control unit. In an online calibration process, the working environment control unit may be configured to: control a working environment (such as temperature and humidity) of a sensor, and/or control a change of a posture of the sensor. For example, the working environment control unit may increase or decrease an environmental parameter (for example, the temperature), and read parameter changes of an environment sensor and a posture sensor before and after the environmental parameter changes, to complete obtaining of a sensor aging calibration parameter and a temperature drift calibration parameter. A unit specifically included in the working environment control unit is not limited in this application, and is determined based on an actual requirement.

For example, the temperature control unit may change the environmental parameter such as the temperature by controlling power of a heating component, power of a metal-oxide semiconductor field-effect transistor (metal-oxide semiconductor field-effect transistor, MOSFET), or active semiconductor refrigeration.

As shown in FIG. 2, the temperature control unit may include a second main control unit, a temperature control circuit, and a heating resistor. The second main control unit controls the heating resistor through the temperature control circuit to change parameters such as temperature and a posture. Optionally, the temperature control unit may include a posture sensor and a temperature sensor. Alternatively, the posture sensor and the temperature sensor may be independent of the temperature control unit.

It should be noted that specific implementations of the posture control unit and the position control unit are similar to that of the temperature control unit. Details are not described herein again.

For example, the first main control unit may be configured to: determine, by using an environment perception algorithm and the first sensor, whether a first device is in a first state; when the first device is in the first state, obtain first data by using a posture detection algorithm and the first sensor, and obtain second data by using the environment perception algorithm and the second sensor; when the first device is in the first state, control the second sensor, and obtain third data of the first sensor and fourth data of the second sensor; and calibrate the first sensor based on the first data, the second data, the third data, and the fourth data when the first device is in the first state. For example, the first sensor may be a sensor configured to detect a posture parameter. For example, the first sensor may be an apparatus or the like configured to perceive a position or angle deviation, such as a posture sensor, an MEMS inertial sensor, a position sensor, a gyroscope, an accelerometer, a GPS, a magnetometer, a magnetic encoder, an optical encoder, an electronic compass, a laser displacement detector, or the like. In this application, a posture parameter change may be evaluated by using the first sensor. An antenna posture change value, such as a change direction, a change margin, and a change angular velocity, may be obtained by processing data of the first sensor. The posture parameter may include the change direction, the change margin, the change angular velocity, and/or the like.

Optionally, in this application, the data of the first sensor may be processed by using the environment perception algorithm, to implement real-time perception of an environmental parameter of the first device (for example, an antenna), determine whether the first device is in a static state or a motion state, and support implementation of whether to perform online calibration or exception protection.

For example, the second sensor may be a sensor configured to detect the environmental parameter. For example, the second sensor may be a temperature sensor, a pressure sensor, an altitude sensor, a barometric pressure sensor, a humidity sensor, or the like. In this application, an environmental parameter change may be evaluated by using the first sensor.

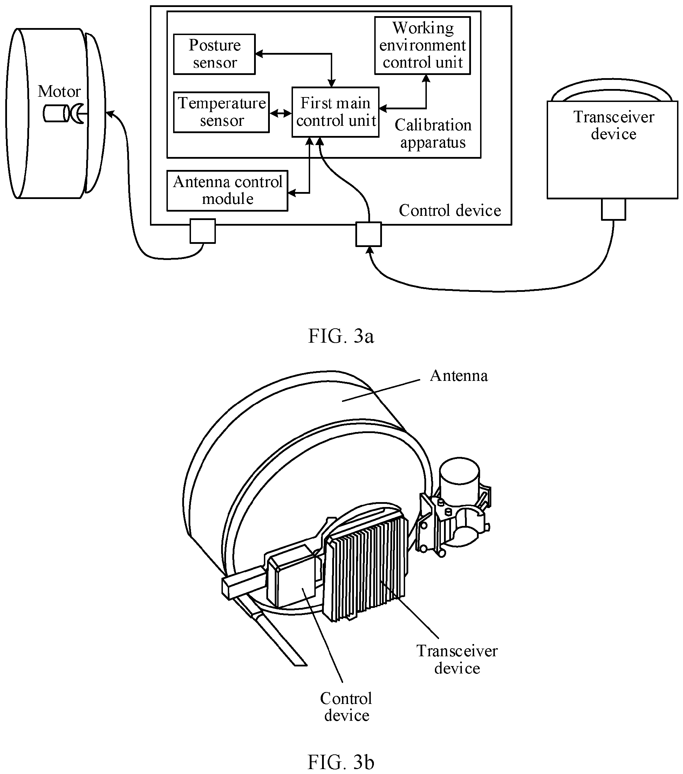

For ease of understanding embodiments of this application, a communication system shown in FIG. 3a and FIG. 3b is first used as an example to describe in detail a communication system applicable to embodiments of this application. For example, FIG. 3a and FIG. 3b are schematic diagrams of architectures of a communication system according to an embodiment of this application.

As shown in FIG. 3a and FIG. 3b, the communication system may include a calibration apparatus, an antenna control module, and an antenna, and may further include a motor and a transceiver device. The communication system may be referred to as an intelligent beam tracking (intelligent beam tracing antenna, IBT) system.

The antenna control module may be referred to as an IBT antenna control module. The calibration apparatus and the antenna control module may be independently disposed, or may be integrated into one device, or the antenna control module is disposed on the calibration apparatus, and for example, is referred to as a control device.

For example, the antenna may be a dual-reflector microwave antenna with an adjustable secondary reflector and a motor. The control device may control the motor to rotate, to pull the antenna to rotate and adjust an angle of the antenna. The motor may be placed inside the antenna.

For example, the transceiver device may be configured to: supply power to the control device, and receive a signal from a peer end. The transceiver device may be referred to as a high-bandwidth (E-band) transceiver device.

In this application, the calibration apparatus, a received signal level (received signal level, RSL) of the transceiver device, and a transmitted signal level (transmitted signal level, TSL) of a transmitter are used. The received signal level RSL of the local end is transmitted to the antenna control module through a cable, and a TSL of the local end is transmitted to the peer end through a spatial link.

For example, in this application, whether an external environment is stable may be determined based on the received signal level of the local end and the transmitted signal level of the transmitter. For example, the calibration apparatus may obtain a theoretical value of a voltage drop from the local end to the peer end through calculation. The theoretical value of the voltage drop may be a preset value. An actual value of the voltage drop may be obtained based on an actual transmitted signal level and an actual received signal level. If the theoretical value of the voltage drop is the same as the actual value of the voltage drop, or a difference between the theoretical value of the voltage drop and the actual value of the voltage drop is within a specific range, it indicates that the external environment is stable, and online calibration may be performed. Otherwise, the calibration is performed after the environment is stable. This is merely an example of determining whether the external environment is suitable for the online calibration. The following method embodiments further set forth other manners.

It should be noted that the solutions in embodiments of this application may be further applied to another communication system, and a corresponding name may alternatively be replaced with a name of a corresponding function in the another communication system.

It should be understood that FIG. 3a and FIG. 3b are merely simplified schematic diagrams of examples for ease of understanding. The communication system may further include another device, which is not shown in FIG. 3a and FIG. 3b.

With development of a mobile wireless network, service traffic of an access network device is increasing, and microwave transmission for backhaul of the access network device is also in an era with a speed over 10 Gbit/s. High-bandwidth (E-band) microwaves become a main solution for 5G service backhaul, 5G service tail-end access, and small-scale aggregation.

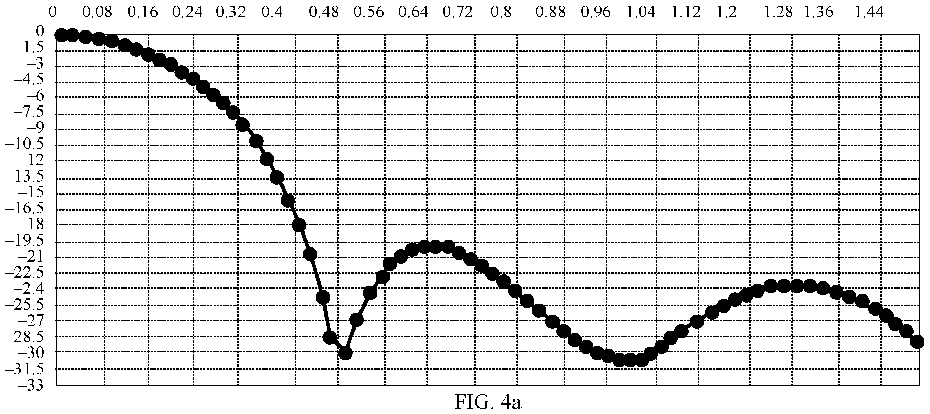

Currently, antennas with a diameter of 0.3 m and 0.6 m are mainly used in a high-bandwidth scenario. An antenna with a larger gain is needed in a long-distance high-bandwidth scenario, for example, an antenna with a diameter of 0.9 m, 1.2 m, or the like. FIG. 4a is a schematic diagram of application of an antenna with a diameter of 0.6 m.

As shown in FIG. 4a, a horizontal coordinate is an angle (unit: degree (°)) from which the antenna deviates from a center, and a vertical coordinate is a degradation value (unit: decibel (decibel, dB)) of received power. Usually, the degradation value of the received power is required according to a standard of +/-3 dB. Due to inherent characteristics such as a high frequency and a large diameter of an antenna, as shown in FIG. 4a, a half-power angle (corresponding to a power angle of an antenna whose degradation value 3 dB of the received power) of the high-bandwidth antenna with the diameter of 0.6 m is +/-0.25°. A half-power angle (corresponding to the power angle of the antenna whose degradation value 3 dB of the received power) of a high-bandwidth antenna with a diameter of 0.9 m is further reduced to +/-0.1° (not shown in FIG. 4a).

As a result, slow or quick shaking of a high-bandwidth antenna due to sunlight or wind causes the received power to degrade greatly or even causes link interruption. This affects user experience. For example, the sunlight brings uneven heat on surfaces of a tower that face toward and away from the sun. As a result, the antenna is bent, and the received power is greatly degraded. For another example, if the tower shakes due to the wind, the received power randomly drops based on a change of a wind speed.

A sensor is greatly affected by aging and temperature, and has errors in antenna posture evaluation due to problems such as sensitivity, zero deviation, and temperature drift coefficient aging, sensitivity temperature drift, and zero deviation temperature drift.

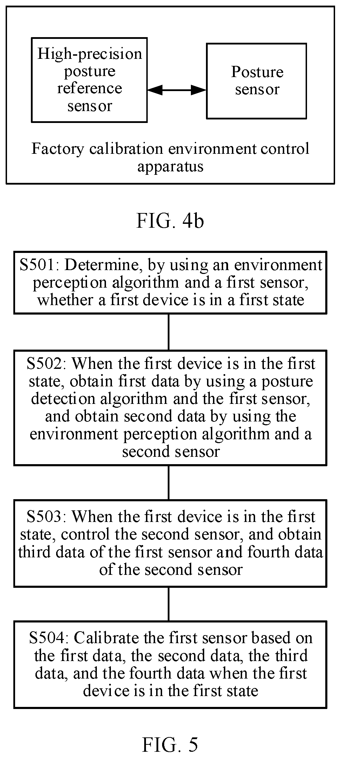

To improve posture detection precision, an MEMS inertial sensor is calibrated in a factory manufacturing phase. As shown in FIG. 4b, fixed zero deviation and temperature drift of a posture sensor are calibrated and compensated for by using a high-precision posture reference sensor and a factory calibration environment control apparatus, to implement factory calibration of temperature drift of a sensor. However, current factory calibration cannot resolve problems of fixed zero deviation aging drift and temperature drift coefficient aging drift resulting from sensor aging. In addition, in a factory manufacturing phase, high-precision calibration is time-consuming and costly, and is not suitable for industrial-level large-scale application.

According to the calibration method provided in this application, the problems of fixed zero deviation aging drift and temperature drift coefficient aging drift resulting from sensor aging can be resolved, so that a problem that a received signal level RSL and a system gain degrade due to degradation of beam tracking precision caused by degradation of posture detection precision resulting from long-term aging and temperature drift of the sensor can be resolved, and detection precision of the sensor can be improved. In addition, factory calibration is not needed. This reduces costs and improves production efficiency.

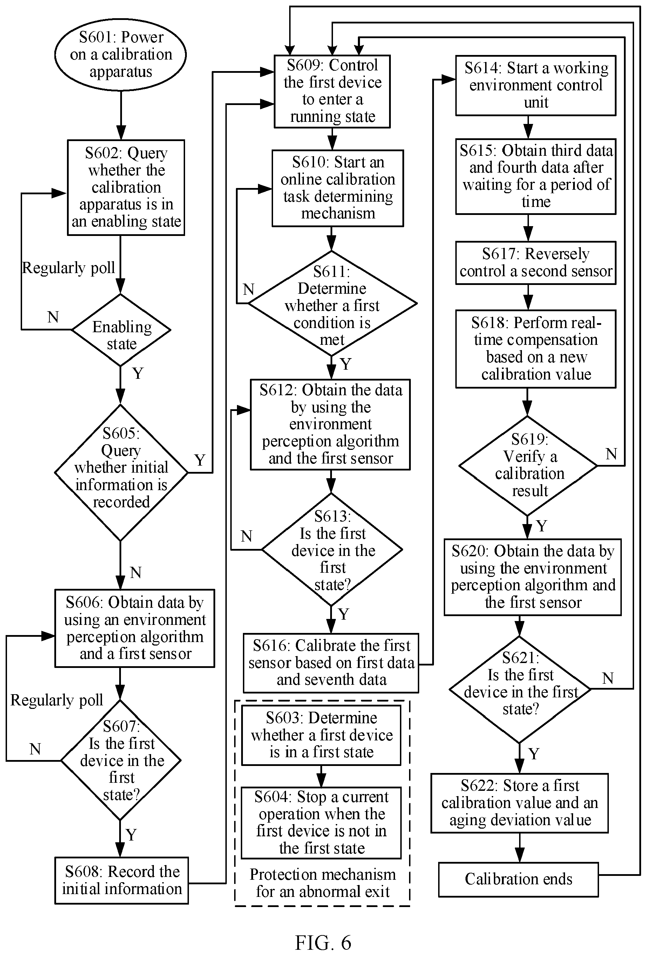

The following describes in detail calibration methods according to embodiments of this application with reference to FIG. 5 and FIG. 6.

For example, FIG. 5 is a schematic flowchart of a calibration method according to an embodiment of this application.

As shown in FIG. 5, the calibration method includes the following steps.

S501: A calibration apparatus determines, by using an environment perception algorithm and a first sensor, whether a first device is in a first state.

For example, the first sensor is configured to detect a posture parameter of the first device. For a specific implementation, refer to the descriptions of the first sensor shown in FIG. 1. Details are not described herein again.

For example, the first device may be an antenna.

For example, the first state may include a static state or a first motion state.

It should be noted that, in this embodiment of this application, the first state may be a state in which the first device can be calibrated. For the static state, if the first device is in a specific movement range, it may be considered that the first device is in the static state. A change angular velocity is used as an example, if the change angular velocity is less than a threshold, it is considered that the first device is in the static state, for example, there is no wind and sunlight that cause a tower to change slowly, and no external environment impact. Different first sensors have different requirements on precision.

For the first motion state, if the first device may be calibrated in a motion state, it may be determined whether the first device is in the first motion state. The first motion state may be a slight shaking state or an evident shaking state.

In a possible design, S501 may include the following step S501a.

S501a: The calibration apparatus determines, by using the environment perception algorithm and the first sensor when a first condition is met, whether the first device is in the first state. Optionally, the first condition may include that a difference between a current moment T and T0 is greater than or equal to a first time threshold, and T0 is a moment of previous-time successful calibration of the first sensor.

For example, the first time threshold may be three months, six months, one year, or the like. This is not limited in this application.

In this way, online calibration can be performed on the first sensor periodically.

In some embodiments, the calibration apparatus may record an event of successfully calibrating the first sensor, and then query the record when determining again whether the first condition is met.

Optionally, the first condition may further include receiving an indication of calibrating the first sensor.

For example, before the indication of calibrating the first sensor is received, an initial state of the first device may be aligned. After preparation work is completed, the calibration apparatus is indicated to work, to perform the online calibration on the first sensor.

In other words, the calibration apparatus may determine whether the indication of calibrating the first sensor is received; and if the indication is not received, wait for the indication, or if the indication is received, continue to perform S501.

FIG. 6 is a schematic flowchart of another calibration method according to an embodiment of this application.

As shown in FIG. 6, S601: The calibration apparatus is powered on, and starts to run after initialization is completed, and the environment perception algorithm starts to work.

S602: The calibration apparatus determines whether the calibration apparatus is in an enabling state. The enabling state may indicate that the indication of calibrating the first sensor is received. If the calibration apparatus is not in the enabling state (N), it is determined whether the calibration apparatus is in the enabling state by polling regularly. If the calibration apparatus is in the enabling state (Y), the following S603 continues to be performed.

In a possible design, the first state includes the static state, and S501 may include the following steps S501b to S501d.

S501b: The calibration apparatus obtains fifth data by using the environment perception algorithm and the first sensor.

Optionally, the fifth data may be an average value in a period of time or a value in a period of time, and the fifth data may be set to be in a specific range. In this way, calibration precision can be improved.

S501c: The calibration apparatus obtains sixth data at an interval of a first time period by using the environment perception algorithm and the first sensor.

Optionally, similar to the fifth data, the sixth data may be an average value in a period of time, or a value in a period of time, and the sixth data may be set to be in a specific range. In this way, the calibration precision can be improved.

S501d: If a difference between the fifth data and the sixth data is less than or equal to a first threshold, determine that the first device is in the first state; otherwise, determine that the first device is not in the first state.

In other words, an external environment may be determined based on a value of the first sensor. If a value change (for example, a change direction, a change margin, or the change angular velocity) is greater than the first threshold, it indicates that the external environment is unstable. Optionally, the calibration apparatus may determine the external environment based on a value of a second sensor. For example, if a temperature change is greater than the first threshold, it indicates that the external environment is unstable.

Optionally, the calibration apparatus may determine the external environment based on a received signal level of a local end and a transmitted signal level of a transmitter. For a specific implementation, refer to the descriptions of FIG. 3a and FIG. 3b. Details are not described herein again.

Optionally, in S501, that a calibration apparatus determines, by using an environment perception algorithm and a first sensor, whether a first device is in a first state may be performed for one time at an interval of a period of time.

In a possible design, the calibration method provided in this embodiment of this application may further include: When the first device is not in the first state, the calibration apparatus stops a current operation, and controls the first device to enter a running state.

Optionally, the running state includes performing beam tracking.

For example, after a beam changes due to wind or other factors, the beam is reversely adjusted, so that the beam is aligned.

In this way, the calibration apparatus calibrates the first sensor when the first device is in the first state, and may interrupt the online calibration in time when the environment changes, for example, when another environment change such as wind or sunlight occurs. If the calibration is performed when the environment is abnormal, a calibration result is abnormal. This affects subsequent normal operating of the first device.

In this way, in a process of performing subsequent S502 to S504, the calibration apparatus may monitor the first state of the first device in real time. If the first device is not in the first state, the calibration apparatus directly stops an operation of calibrating the first sensor, so that the first device exits the online calibration; and controls the first device to enter a normal running state. Optionally, because the first device is not in the first state, after the calibration apparatus stops the operation of calibrating the first sensor, the calibration apparatus may continue to monitor the first state of the first device, and start to calibrate the first sensor after the first device is in the first state. As shown in FIG. 6, the calibration method shown in FIG. 6 may further include S603 and S604. S603: The calibration apparatus determines, by using the environment perception algorithm and the first sensor, whether the first device is in the first state. S604: When the first device is not in the first state, the calibration apparatus stops a current operation, and controls the first device to enter the running state. The calibration apparatus continues to monitor the first state of the first device, and starts to calibrate the first sensor after the first device is in the first state. In S603 and S604, the external environment is detected in real time with reference to a posture and environment perception algorithm, and S603 and S604 may be used as a protection mechanism for an abnormal exit in a calibration process.

S502: When the first device is in the first state, the calibration apparatus obtains first data by using a posture detection algorithm and the first sensor, and obtains second data by using the environment perception algorithm and the second sensor.

For example, the second sensor may be configured to detect a parameter of the environment in which the first device is located. For a specific implementation, refer to the descriptions of the first sensor shown in FIG. 1. Details are not described herein again.

For example, temperature and an angle are used as examples. A first angle value is detected by using a posture sensor, and a value of 25 degrees Celsius is detected by using a temperature sensor. As shown in FIG. 6, the calibration method shown in FIG. 6 may further include S605 to S613. S605: The calibration apparatus queries whether initial information of the first sensor and initial information of the second sensor are currently recorded. For example, the initial information of the first sensor, such as the first data, and the initial information of the second sensor, such as the second data are specifically information such as a pitch angle, an azimuthal angle, sensor temperature, and zero deviation.

If the initial information is not recorded, the calibration apparatus performs S606 to S608, to obtain the initial information.

S606: The calibration apparatus obtains data by using the environment perception algorithm and the first sensor.

For a specific implementation of S606, refer to the implementations of S501b and S501c.

S607: The calibration apparatus determines whether the first device is in the first state.

For a specific implementation of S607, refer to the implementation of S501d. Optionally, if the condition is not met, polling is regularly performed for one time, and S606 is performed.

S608: The calibration apparatus records the initial information of the first sensor and the initial information of the second sensor.

S609: The calibration apparatus controls the first device to enter the running state.

Optionally, the running state includes performing the beam tracking. For details, refer to the descriptions of S501. Details are not described herein again.

S610: The calibration apparatus starts an online calibration task determining mechanism. In other words, the calibration apparatus may determine whether a condition for calibrating the first sensor is met.

S611: The calibration apparatus determines whether the first condition is met.

For a specific implementation of the first condition, refer to the implementation of S501a. Optionally, if the first condition is not met, S610 and S611 are regularly polled for one time. S612: The calibration apparatus obtains the data by using the environment perception algorithm and the first sensor.

For a specific implementation of S612, refer to the implementations of S501b and S501c.

S613: The calibration apparatus determines whether the first device is in the first state.

For a specific implementation of S613, refer to the implementation of S501d. Optionally, if the condition is not met, S612 and S613 are regularly polled for one time.

S503: When the first device is in the first state, the calibration apparatus controls the second sensor, and obtains third data of the first sensor and fourth data of the second sensor.

For example, when the first device is in the first state, temperature of the temperature sensor is controlled, and a value of the posture sensor is adjusted, where the value of the posture sensor changes with the temperature. For example, the temperature sensor is controlled to adjust the temperature from 25 degrees Celsius to 50 degrees Celsius (in this case, temperature of the external environment does not change or changes slightly), and a second angle value is detected by using the posture sensor.

As shown in FIG. 6, the calibration method shown in FIG. 6 may further include S614 and S615. S614: Start a working environment control unit, where the working environment control unit may control a value of the second sensor. S615: Obtain the third data of the first sensor and the fourth data of the second sensor after waiting for a period of time.

S504: The calibration apparatus calibrates the first sensor based on the first data, the second data, the third data, and the fourth data when the first device is in the first state.

For example, the temperature and the angle are used as examples, and the posture sensor is calibrated based on the value of 25 degrees Celsius, a value of 50 degrees Celsius, the first angle value, and the second angle value.

In a possible design, when the first device is in the first state, S504 may include the following S504a and S504b.

S504a: The calibration apparatus compensates for the third data of the first sensor based on a first calibration value when the first device is in the first state, to obtain eighth data.

Optionally, the first calibration value may be determined based on the first data, the second data, the third data, and the fourth data.

For example, the first calibration value may be a temperature drift coefficient, and the temperature drift coefficient may be calculated based on the value of 25 degrees Celsius, the value of 50 degrees Celsius, the first angle value, and the second angle value.

S504b: The calibration apparatus stores the first calibration value if a difference between the eighth data and the second data is less than a second threshold.

Optionally, S504 may further include S504c.

S504c: If the difference between the eighth data and the second data is greater than or equal to the second threshold, stop a current operation, and control the first device to enter the running state. Optionally, the running state may include performing the beam tracking.

In other words, in the process in which the first sensor is calibrated, an adjusted value may be determined, to ensure calibration correctness. If the adjusted value is less than the preset second threshold, it may be considered that the calibration process is normal, and the calibration continues. If the adjusted value is greater than or equal to the preset second threshold, it may be considered that an exception occurs in the calibration process, causing an exception in the adjusted value. The current operation is stopped, and the calibration is exited.

Optionally, the calibration method shown in FIG. 5 may further include: After performing S504 of calibrating the first sensor, the calibration apparatus obtains data 1 of the first sensor and data 2 of the second sensor; then reversely controls the second sensor, and obtains new data 3 of the first sensor and new data 4 of the second sensor; and generates a new calibration value (for example, a temperature drift coefficient), and performs real-time compensation based on the new calibration value. An implementation is similar to implementations of S502 to S504. Details are not described herein again.

Optionally, that the second sensor is reversely controlled is that the second sensor is reversely controlled relative to S503. For example, the temperature sensor is used as an example. In S503, the temperature is increased, for example, the temperature is adjusted from 25 degrees Celsius to 50 degrees Celsius. That the second sensor is reversely controlled may be that the temperature is decreased, for example, the temperature is adjusted from 50 degrees Celsius to 25 degrees Celsius. For example, the new calibration value is used to compensate for the data 3 of the first sensor. If a difference between a value (for example, data 5 of the first sensor) obtained through the compensation and the data 1 of the first sensor is less than or equal to a specified third threshold, the calibration succeeds; otherwise, data of this time of calibration is discarded, and the calibration is exited.

In this way, a calibration result may be verified. If the difference between the value (for example, the data 5 of the first sensor) obtained through the compensation and the data 1 of the first sensor is less than or equal to the specified third threshold, the calibration result is precise; otherwise, the calibration result is abnormal, and this time of calibration is exited, and re-calibration may be performed. In this way, it is verified whether a parameter after the compensation meets a calibration precision requirement, to ensure precision of the online calibration.

In a possible design, the calibration method shown in FIG. 5 may further include: The calibration apparatus calibrates the first sensor based on the first data and seventh data.

Optionally, the seventh data may be initial data obtained by using the first sensor or obtained by using the first sensor after previous-time calibration.

For example, when the external environment is in the first state, the calibration apparatus may calibrate, based on data Aₙ of the first sensor and data Aₙ₋₁ of the first sensor, an error caused by aging, where a difference between the data Aₙ of the first sensor and the data Aₙ₋₁ of the first sensor may be an aging deviation value of the first sensor. The data Aₙ of the first sensor is a current value of the first sensor, and the data Aₙ₋₁ of the first sensor is a value of the first sensor after previous-time calibration.

Optionally, a time interval between obtaining the first data and obtaining the seventh data may be the first time threshold, for example, one calibration periodicity.

Optionally, a difference between the first data and the seventh data may be referred to as the aging deviation value.

As shown in FIG. 6, the calibration method shown in FIG. 6 may further include S616. S616: The calibration apparatus calibrates the first sensor based on the first data and the seventh data.

It should be noted that a sequence of S616, S614, and S615 is not limited in this application. A sequence of calibrating deviation caused by the aging and calibrating deviation caused by temperature drift is not limited in this embodiment of this application. FIG. 6 is merely an example. As shown in FIG. 6, the calibration method shown in FIG. 6 may further include S617 to S622. S617: The calibration apparatus reversely controls the second sensor. S618: The calibration apparatus performs the real-time compensation based on the new calibration value. S619: The calibration apparatus verifies the calibration result. Optionally, if a verification result is accurate, S620 is performed; otherwise, this time of calibration is exited, and S609 is performed.

S620: The calibration apparatus obtains the data by using the environment perception algorithm and the first sensor. For a specific implementation, refer to the implementations of S501b and S501c.

S621: The calibration apparatus determines whether the first device is in the first state. For a specific implementation, refer to the implementation of S501d. If the condition is met, S622 is performed. If the condition is not met, this time of calibration is exited, and S609 is performed. S622: The calibration apparatus stores the first calibration value and the aging deviation value.

For example, if the environment in a process of this time of calibration is in the first state, aging drift and temperature drift coefficients of the first sensor are updated, and the online calibration ends. S609 in which the calibration apparatus controls the first device to enter the running state is performed, as shown in FIG. 6.

In other words, if it is determined that the calibration result is valid, calibration and recording are performed. After the calibration, the first device is enabled to enter the running state. For example, based on a change between posture data before and after a working environment change of the first sensor, error (temperature drift, aging, and the like) parameter calibration is completed, and an error compensation table is generated.

According to the calibration method provided in FIG. 5, the calibration apparatus determines, by using the environment perception algorithm and the first sensor, whether the first device is in the first state; and calibrates the first sensor based on the first data, the second data, the third data, and the fourth data when the first device is in the first state, where the first state includes the static state or the first motion state. In this way, whether to perform the online calibration on the first sensor is determined by detecting the external environment, so that online calibration of a temperature drift coefficient can be implemented. Therefore, a problem of a temperature drift coefficient change due to aging of the sensor in its using process can be resolved, and precision of the first sensor can be improved.

In this application, unless otherwise specified, for identical or similar parts in embodiments, refer to each other. In embodiments of this application and the implementations/ methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

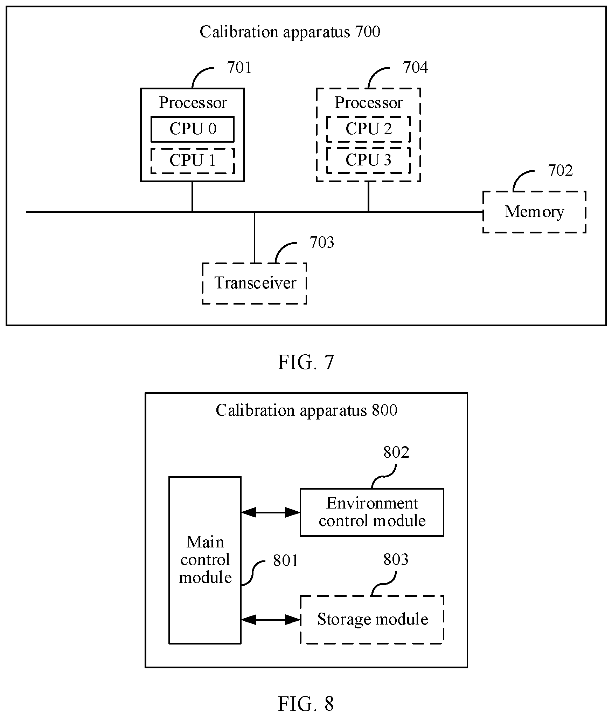

The foregoing describes in detail the calibration methods according to embodiments of this application with reference to FIG. 5 and FIG. 6. The following describes in detail calibration apparatuses according to embodiments of this application with reference to FIG. 7 and FIG. 8. FIG. 7 is a schematic diagram of a structure of a calibration apparatus that may be configured to perform a calibration method according to an embodiment of this application. The calibration apparatus 700 may be a calibration apparatus, or may be a chip used in a calibration apparatus or another component having a corresponding function. As shown in FIG. 7, the calibration apparatus 700 may include a processor 701. Optionally, the calibration apparatus 700 may further include one or more of a memory 702 and a transceiver 703. The processor 701 and the one or more of the memory 702 and the transceiver 703 may be coupled, for example, may be connected through a communication bus, or the processor 701 may be used independently.

The following describes each component of the calibration apparatus 700 in detail with reference to FIG. 7.

The processor 701 is a control center of the calibration apparatus 700, and may be one processor, or may be a collective name of a plurality of processing elements. For example, the processor 701 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

The processor 701 may perform various functions of the calibration apparatus 700 by running or executing a software program stored in the memory 702 and invoking data stored in the memory 702.

During specific implementation, in an embodiment, the processor 701 may include one or more CPUs, such as a CPU 0 and a CPU 1 shown in FIG. 7.

During specific implementation, in an embodiment, the calibration apparatus 700 may alternatively include a plurality of processors, for example, the processor 701 and a processor 704 shown in FIG. 7. Each of the processors may be a single-core processor (single-CPU) or may be a multi-core processor (multi-CPU). The processor herein may be one or more communication devices, circuits, and/or processing cores configured to process data (for example, computer program instructions).

Optionally, the memory 702 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of an instruction or a data structure and that can be accessed by a computer. However, this is not limited thereto. The memory 702 may be integrated with the processor 701, or may exist independently, and is coupled to the processor 701 through an input/output port (not shown in FIG. 7) of the calibration apparatus 700. This is not specifically limited in this embodiment of this application.

For example, the input port may be configured to implement a receiving function performed by the calibration apparatus in any one of the foregoing method embodiments, and the output port may be configured to implement a sending function performed by the calibration apparatus in any one of the foregoing method embodiments.

The memory 702 may be configured to store a software program for implementing solutions of this application, and the processor 701 controls execution. For a specific implementation, refer to the method embodiments. Details are not described herein again.

Optionally, the transceiver 703 is configured to communicate with another device. For example, the transceiver 703 may be configured to communicate with the antenna control module and/or the transceiver device shown in FIG. 3a. In addition, the transceiver 703 may include a receiver and a transmitter (not separately shown in FIG. 7). The receiver is configured to implement a receiving function, and the transmitter is configured to implement a sending function. The transceiver 703 may be integrated with the processor 701, or may exist independently, and is coupled to the processor 701 through the input/output port (not shown in FIG. 7) of the calibration apparatus 700. This is not specifically limited in this embodiment of this application.

It should be noted that the structure of the calibration apparatus 700 shown in FIG. 7 does not constitute a limitation on the calibration apparatus. An actual calibration apparatus may include more or fewer components than those shown in the figure, combine some components, or have different component arrangement.

The processor 701 in the calibration apparatus 700 shown in FIG. 7 may invoke application program code stored in the memory 702, to indicate the calibration apparatus to perform actions of the calibration apparatus in FIG. 5 and FIG. 6.

It should be noted that all related content of the steps in the foregoing method embodiments may be cited in function descriptions of corresponding functional modules. Details are not described herein again.

FIG. 8 is a schematic diagram of a structure of still another calibration apparatus according to an embodiment of this application. For ease of description, FIG. 8 shows only main components of the calibration apparatus.

The calibration apparatus 800 includes a main control module 801 and an environment control module 802. The calibration apparatus 800 may be the calibration apparatus in the foregoing method embodiments.

It should be noted that the main control module 801 and the environment control module 802 may be integrated for use, or may be used separately. This is not limited in this application.

The calibration apparatus may further include a storage module 803 and a transceiver module (not shown in FIG. 8). The transceiver module is configured to send data and/or signaling to a first device, and may be further configured to receive data and/or signaling sent by another device. The transceiver module may include a receiving module and a sending module. The sending module is configured to send the data and/or the signaling to the first device, and the receiving module is configured to receive the data and/or the signaling sent by the another device. A specific implementation of the transceiver module is not specifically limited in this application.

In this embodiment, the calibration apparatus 800 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the calibration apparatus 800 may be in a form of the calibration apparatus 700 shown in FIG. 7.

For example, the processor 701 in the calibration apparatus 700 shown in FIG. 7 may invoke computer-executable instructions stored in the memory 702, so that the calibration method in the foregoing method embodiments is performed.

Alternatively, functions/implementation processes of the main control module 801 and the environment control module 802 in FIG. 8 may be implemented by the processor 701 in the calibration apparatus 700 shown in FIG. 7 by invoking computer-executable instructions stored in the memory 702, and a function/an implementation process of the transceiver module in FIG. 8 may be implemented by using the transceiver 703 in the calibration apparatus 700 shown in FIG. 7.

The calibration apparatus 800 provided in this embodiment may perform the foregoing calibration methods. Therefore, for technical effects that can be achieved by the calibration apparatus 800, refer to the foregoing method embodiments. Details are not described herein again.

In a possible design, the calibration apparatus 800 shown in FIG. 8 is applicable to the communication system shown in FIG. 3a and FIG. 3b, and performs functions of the calibration apparatuses in the calibration methods shown in FIG. 5 and FIG. 6.

The main control module 801 is configured to determine, by using an environment perception algorithm and a first sensor, whether the first device is in a first state. The first sensor is configured to detect a posture parameter of the first device. The first state includes a static state or a first motion state.

The main control module 801 is further configured to: when the first device is in the first state, obtain first data by using a posture detection algorithm and the first sensor, and obtain second data by using the environment perception algorithm and a second sensor. The second sensor is configured to detect a parameter of an environment in which the first device is located.

When the first device is in the first state, the main control module 801 is further configured to: control the second sensor by using the environment control module 802, and obtain third data of the first sensor and fourth data of the second sensor.

The main control module 801 is further configured to calibrate the first sensor based on the first data, the second data, the third data, and the fourth data when the first device is in the first state. In a possible design, the first state may include the static state. The main control module 801 is further configured to obtain fifth data by using the environment perception algorithm and the first sensor.

The main control module 801 is further configured to obtain sixth data at an interval of a first time period by using the environment perception algorithm and the first sensor.

The main control module 801 is further configured to: if a difference between the fifth data and the sixth data is less than or equal to a first threshold, determine that the first device is in the first state; otherwise, determine that the first device is not in the first state.

In a possible design, the main control module 801 is further configured to calibrate the first sensor based on the first data and seventh data. The seventh data may be initial data obtained by using the first sensor or obtained by using the first sensor after previous-time calibration.

In a possible design, when the first device is not in the first state, the main control module 801 is further configured to: stop a current operation, and control the first device to enter a running state. The running state includes performing beam tracking.

In a possible design, the main control module 801 is further configured to compensate for the third data of the first sensor based on a first calibration value when the first device is in the first state, to obtain eighth data. The first calibration value may be determined based on the first data, the second data, the third data, and the fourth data.

The calibration apparatus may further include the storage module. The storage module is configured to store the first calibration value if a difference between the eighth data and the second data is less than a second threshold.

In a possible design, if the difference between the eighth data and the second data is greater than or equal to the second threshold, the main control module 801 is further configured to: stop a current operation, and control the first device to enter the running state. The running state may include performing the beam tracking.

In a possible design, the main control module 801 is further configured to determine, by using the environment perception algorithm and the first sensor when a first condition is met, whether the first device is in the first state. The first condition may include that a difference between a current moment T and T0 is greater than or equal to a first time threshold, and T0 is a moment of previous-time successful calibration of the first sensor.

In a possible design, the first condition may further include receiving an indication of calibrating the first sensor.

Optionally, the storage module stores a program or instructions. When a processing module executes the program or the instructions, the calibration apparatus 800 can perform the calibration methods in FIG. 5 and FIG. 6.

It should be noted that the calibration apparatus 800 may be a chip (system) or another part or component that may be disposed on a calibration apparatus. This is not limited in this application. In addition, for technical effects of the calibration apparatus 800, refer to technical effects of the calibration methods shown in FIG. 5 and FIG. 6. Details are not described herein again.

An embodiment of this application provides a communication system. The communication system may include a calibration apparatus, an antenna control module, and an antenna, and may further include a motor and a transceiver device.

An embodiment of this application provides a chip system. The chip system includes a logic circuit and an input/output port. The logic circuit may be configured to implement a processing function in the calibration method provided in embodiments of this application, and the input/output port may be configured to implement sending and receiving functions in the calibration method provided in embodiments of this application.

For example, the input port may be configured to implement a receiving function in the calibration method provided in embodiments of this application, and the output port may be configured to implement a sending function in the calibration method provided in embodiments of this application.

For example, the processor in the calibration apparatus 700 may be configured to perform, for example, but not limited to, baseband-related processing, and the transceiver in the calibration apparatus 700 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-chip (system-on-chip). Whether components are independently disposed on different chips or are integrated and disposed on one or more chips usually depends on a specific requirement of a product design. This embodiment of this application imposes no limitation on specific implementations of the foregoing components.

In a possible design, the chip system further includes a memory, and the memory is configured to store program instructions and data for implementing functions in the calibration method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the calibration method provided in embodiments of this application is performed.

An embodiment of this application provides a computer program product. The computer program product includes a computer program or instructions. When the computer program or the instructions are run on a computer, the calibration method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic component, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When the software is used to implement embodiments, all or some of the foregoing embodiments may be implemented in a form of a computer program product. The computer program product includes one or more computer instructions or computer programs. When the program instructions or the computer programs are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to context for understanding.

In this application, "at least one" means one or more, and "a plurality of" means two or more. "At least one of the following items (pieces)" or a similar expression thereof refers to any combination of these items, including any combination of a singular item (piece) or plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but it should not be considered that the implementation goes beyond the scope of this application.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A calibration method, comprising:
determining, by using an environment perception algorithm and a first sensor, whether a first device is in a first state, wherein the first sensor is configured to detect a posture parameter of the first device, and the first state comprises a static state or a first motion state;
when the first device is in the first state, obtaining first data by using a posture detection algorithm and the first sensor, and obtaining second data by using the environment perception algorithm and a second sensor, wherein the second sensor is configured to detect a parameter of an environment in which the first device is located;
when the first device is in the first state, controlling the second sensor, and obtaining third data of the first sensor and fourth data of the second sensor; and
calibrating the first sensor based on the first data, the second data, the third data, and the fourth data when the first device is in the first state.

2. The calibration method according to claim 1, wherein the first state comprises the static state, and the determining, by using an environment perception algorithm and a first sensor, whether a first device is in a first state comprises:
obtaining fifth data by using the environment perception algorithm and the first sensor;
obtaining sixth data at an interval of a first time period by using the environment perception algorithm and the first sensor; and
if a difference between the fifth data and the sixth data is less than or equal to a first threshold, determining that the first device is in the first state; or if a difference between the fifth data and the sixth data is greater than a first threshold, determining that the first device is not in the first state.

3. The calibration method according to claim 1 or 2, wherein the method further comprises:
calibrating the first sensor based on the first data and seventh data, wherein the seventh data is initial data obtained by using the first sensor or obtained by using the first sensor after previous-time calibration.

4. The calibration method according to any one of claims 1 to 3, wherein the method further comprises:
when the first device is not in the first state, stopping a current operation, and controlling the first device to enter a running state, wherein the running state comprises performing beam tracking.

5. The calibration method according to any one of claims 1 to 4, wherein the calibrating the first sensor based on the first data, the second data, the third data, and the fourth data when the first device is in the first state comprises:
compensating for the fourth data of the first sensor based on a first calibration value when the first device is in the first state, to obtain eighth data, wherein the first calibration value is determined based on the first data, the second data, the third data, and the fourth data; and
storing the first calibration value if a difference between the eighth data and the second data is less than a second threshold.

6. The calibration method according to claim 5, wherein the method further comprises:
if the difference between the eighth data and the second data is greater than or equal to the second threshold, stopping a current operation, and controlling the first device to enter the running state, wherein the running state comprises performing the beam tracking.

7. The calibration method according to any one of claims 1 to 6, wherein the determining, by using an environment perception algorithm and a first sensor, whether a first device is in a first state comprises:
determining, by using the environment perception algorithm and the first sensor when a first condition is met, whether the first device is in the first state, wherein the first condition comprises that a difference between a current moment T and T0 is greater than or equal to a first time threshold, and T0 is a moment of previous-time successful calibration of the first sensor.

8. The calibration method according to claim 7, wherein the first condition further comprises receiving an indication of calibrating the first sensor.

9. A calibration apparatus, wherein the calibration apparatus comprises a unit or a module configured to perform the method according to any one of claims 1 to 8.

10. A communication apparatus, wherein the communication apparatus comprises a processor, and the processor is configured to perform the calibration method according to any one of claims 1 to 8.

11. A computer-readable storage medium, wherein the computer-readable storage medium comprises a computer program or instructions; and when the computer program or the instructions are run on a computer, the calibration method according to any one of claims 1 to 8 is performed.

12. A computer program product, wherein the computer program product comprises a computer program or instructions; and when the computer program or the instructions are run on a computer, the calibration method according to any one of claims 1 to 8 is performed.
